# EUROPÄISCHE PATENTSCHRIFT

(11) **EP 0 389 660 B1**
(45) Veröffentlichungstag und Bekanntmachung des Hinweises auf die Patenterteilung: **14.12.1994**
(21) Anmeldenummer: 89105644.2
(22) Anmeldetag: 30.03.1989
(51) Int. Cl.: G06F 11/26

(54) **Schaltungsanordnung für Datenverarbeitungsanlagen mit durch Mikrobefehlsabläufe gesteuerten Funktionseinheiten**
Circuit arrangement for data-processing installations with functional units controlled by micro instruction procedures
Agencement de circuit pour installations de traitement de données ayant des unités fonctionnelles commandées par exécution de micro instructions

(43) Veröffentlichungstag der Anmeldung: 03.10.1990
(73) Patentinhaber: Siemens Nixdorf Informationssysteme Aktiengesellschaft, 33102 Paderborn (DE)
(72) Erfinder: Tielcke, Rolf, Dipl.-Ing., D-8000 München 71 (DE)
(74) Vertreter: Fuchs, Franz-Josef, Dr.-Ing.

(56) Entgegenhaltungen:
- EP-A- 0 009 600
- DE-A- 2 019 795
- US-A- 4 034 195
- IBM PERSONAL SYSTEM/2, MODEL 80, TECHNICAL REFERENCE, April 1987, Seiten 4.7-4-18,6.21, IBM CORP.
- IBM TECHNICAL DISCLOSURE BULLETIN, Band 25, Nr. 4, September 1982, Seite 2208,New York, US; P.E. MILLING: "Cassette motor relay wrap circuit"

## Beschreibung

Die Erfindung betrifft eine Schaltungsanordnung für Datenverarbeitungsanlagen mit durch Mikrobefehlsabläufe gesteuerten Funktionseinheiten, die über Schnittstellenanschlüsse mit dem Wartungsprozessor zur Steuerung von Wartungsoperationen verbunden sind, gemäß dem Oberbegriff des Patentanspruchs 1.

Bekanntermaßen ist in einer Datenverarbeitungsanlage ein Wartungsprozessor vorgesehen, der zur Ausführung von Wartungsoperationen selektiv mit einer von mehreren Funktionseinheiten der Datenverarbeitungsanlage, wie z. B. Verarbeitungseinheit, Ein-/Ausgabeeinheit, usw., über Schnittstellenanschlüsse verbunden ist. Die Patentschrift DE 28 42 603 beschreibt eine aufwandsarme und durch hohe Verfügbarkeit gekennzeichnete Wartungsschnittstelle mit einem Schnittstellenadapter zur Umsetzung des möglichst schmalen Schnittstellenanschlusses in eine breitere, interne Schnittstelle zur Funktionseinheit. Über diesen Schnittstellenanschluß werden jeweils Daten- und Taktsignale bitseriell vom und zum Wartungsprozessor übertragen, wobei im Schnittstellenadapter die ankommenden Wartungsbefehlssignale in einem Zwischenregister gespeichert und zum Teil in Steuersignale für den Datenaustausch zwischen der angeschlossenen Funktionseinheit und dem Wartungsprozessor umgesetzt werden.

Um die in einer Reihe von Registern der Funktionseinheit enthaltenen Daten für den Wartungsprozessor zugänglich zu machen, sind diese Register durch entsprechende Steuersignale des Wartungsprozessors als Schieberegister betreibbar, wobei die seriellen Datenanschlüsse mit dem seriellen Datenweg des Wartungsprozessors gekoppelt sind. Dabei können die seriellen Datenwege mehrerer dieser Register fest in Reihe geschaltet sein.

Außerdem dient eines der auf den Schiebebetrieb in Verbindung mit dem Wartungsprozessor umschaltbaren Register, das sowohl eingangs- als auch ausgangsseitig mit dem internen parallelen Leitungssystem der Funktionseinheit koppelbar ist, dazu, einen Datenaustausch auch zwischen anderen, nur über das parallele Leitungssystem der Funktionseinheit erreichbaren Registern und dem Wartungsprozessor durchführen zu können, indem durch gesonderte Steuersignale des Wartungsprozessors entweder vor oder nach der seriellen Datenübertragung zusätzlich eine Übertragung über das parallele Leitungssystem zwischen dem ausgewählten parallel arbeitenden Register und dem auf Schiebebetrieb umschaltbaren Register ausgeführt wird. Der durch den Wartungsprozessor bedingte Serienbetrieb setzt dabei voraus, daß die normalerweise in Parallelbetrieb arbeitenden Register der Funktionseinheit nur im Stopzustand der Funktionseinheit vom Wartungsprozessor aus angesteuert werden können, damit von beiden Einheiten verursachte Änderungen der Daten sich nicht überlagern und zu Verfälschungen führen.

Die Erfindung bezweckt, ausgehend von einer Schaltungsanordnung der eingangs genannten Art, eine vorteilhafte Ausnutzung der Steuerungsmöglichkeiten für die Durchführung von Wartungs- und Testoperationen.

Die dies ermöglichende, neue Schaltungsanordnung ergibt sich aus den kennzeichnenden Merkmalen des Patentanspruches 1.

Danach hat nun auch die durch Mikrobefehle gesteuerte Funktionseinheit die Möglichkeit, bisher nur vom Wartungsprozessor veranlaßte Steuerungsoperationen auszuführen und sich gegebenenfalls Daten zugänglich zu machen, für die bisher kein Zugriff bestand, weil für deren Paralleleinspeisung in das parallele Leitungssystem der Funktionseinheit keine Anschlüsse verfügbar sind. Letzteres gilt insbesondere für die in modernen integrierten Schaltkreisbausteinen für Prüf- und Testzwecke integrierten reinen Schieberegister. Durch die zwischen dem vorhandenen Parallel-/Serienregister und allen Schieberegistern - unabhängig davon, ob sie reine Schieberegister oder umschaltbare Parallelregister sind - zusätzlich geschaffenen seriellen Übertragungsmöglichkeiten sind alle darin enthaltenen Daten für das parallele Leitungssystem der Funktionseinheit zugänglich und über dieses austauschbar.

Außerdem ermöglicht die Umschaltbarkeit der vorhandenen Schnittstellenleitungen auf die beiden möglichen Steuerquellen, nämlich Wartungsprozessor oder Mikroprogrammsteuerung der Funktionseinheit, in Verbindung mit einem weiteren Befehlsregister in aufwandssparender Weise eine Entkopplung zwischen diesen beiden Steuerquellen.

Weiterbildungen der Erfindung beziehen sich auf die Steuerung der jeweiligen Umschaltung der internen Schnittstellenleitungen und die Überwachung der einzelnen Schiebevorgänge.

Einzelheiten der Erfindung werden anhand eines in der Zeichnung dargestellten Ausführungsbeispiels näher erläutert. Dabei zeigt
- FIG 1: ein Blockschaltbild der erfindungsgemäßen Schaltungsanordnung und
- FIG 2: ein Blockschaltbild zur Erzeugung des Steuersignals für die Umschaltung der Schnittstellenleitungen auf die Steuerleitungen der Mikrobefehlssteuerung.

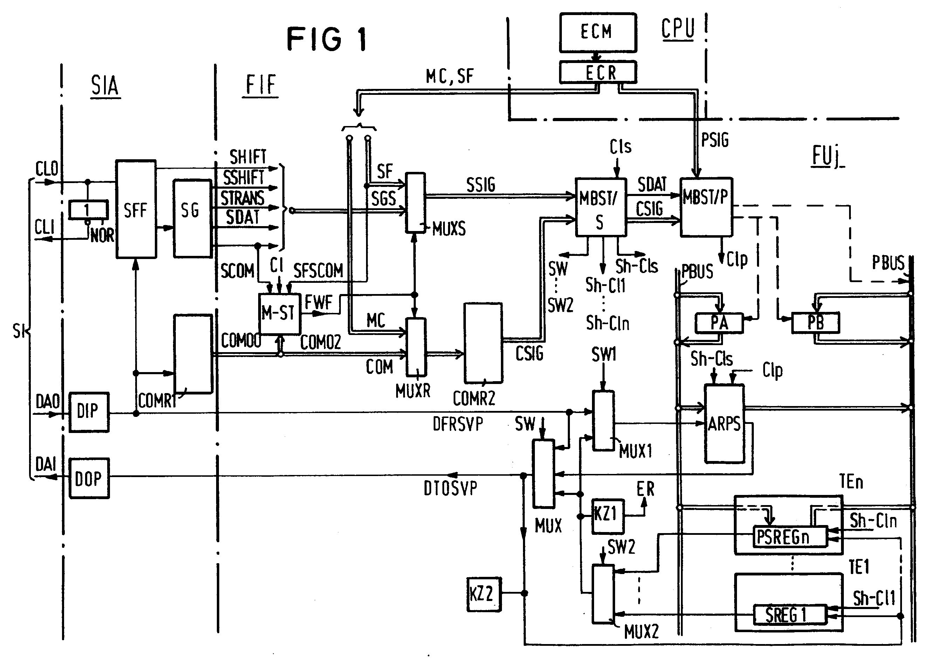

Das Blockschaltbild gemäß FIG 1 zeigt in Anlehnung an DE-PS 28 42 603 die Verbindung eines Wartungsprozessors SVP über einen Schnittstellenanschluß SI und den Schnittstellenadapter SIA mit einer Funktionseinheit FUj, wobei der Schnittstellenadapter SIA als Zwischenspeicher von Steuer- und Dateninformationen zu und von der Funktionseinheit FUj dient.

Über den Schnittstellenanschluß SI laufen mehrere Signale in beide Richtungen: Vom Wartungsprozessor SVP werden ein Eingangstaktsignal CLO und ein Datenausgangssignal DAO geliefert sowie in der Gegenrichtung vom Schnittstellenadapter SIA ein aus dem Ausgangstaktsignal CLO über das Negations-Gatter NOR abgeleitetes Eingangstaktsignal CLI und ein Dateneingangssignal DAI abgegeben. Das Dateneingangssignal DAI zum Wartungsprozessor SVP wird durch eine Datensendeschaltung DOP übertragen, der eine Datenempfangsschaltung DIP zum Schnittstellenadapter SIA zur Aufnahme des vom Wartungsprozessor SVP bereitgestellten Datenausgangssignals DAO entspricht. Eine Datensendung wird dabei über die Schnittstelle FIF als Datensignal DFRSVP an die Funktionseinheit FUj übergeben, während bei einer Befehlssendung die Ausgangssignale der Datenempfangsschaltung DIP in ein Befehlsregister COMR1 seriell eingetragen werden. Außerdem werden mit den von der Datenempfangsschaltung DIP abgegebenen Signalen in Verbindung mit dem Ausgangstaktsignal CLO Zustandsflipflops SFF gesetzt, aus deren Zustand Ansteuersignale für einen Strobegenerator SG abgeleitet werden.

Die vom Strobegenerator SG erzeugten Steuersignale SGS bestehen aus dem Strobeimpuls SCOM, der einen in den Schnittstellenadapter SIA übernommenen Wartungsbefehl COM für die Funktionseinheit FUj für gültig erklärt, aus dem Strobeimpuls STRANS zur Einleitung eines Datentransfers aus einem der an das parallele Leitungssystem PBUS angeschlossenen Register PA oder PB, aus dem Strobeimpuls SDAT, der am Ende einer Datenein- oder Datenausgabe die seriell übernommene Information parallel in das ausgewählte Register überträgt, sowie aus dem Strobeimpuls SSHIFT, der begleitet vom Impuls SHIFT eine bitserielle Datenein- bzw. Datenausgabe als Schiebeimpuls auslöst. Die ermittelten Steuersignale SGS und die im Befehlsregister COMR1 gespeicherten Befehlssignale COM werden an die interne Schnittstelle FIF parallel abgegeben.

Für die Steuerung von Wartungs- und Testoperationen durch die Mikrobefehlssteuerung der Funktionseinheit FUj wird im Rahmen des normalen Steuerungsablaufs ein den Steuerbefehlen COM des Wartungsprozessors SVP entsprechender Mikrobefehl aus dem Mikroprogrammspeicher ECM gelesen und durch die nachgeschaltete Signaleinheit ECR in die benötigten Steuersignale umgesetzt, von denen die Signale PSIG der für die Parallelregistersteuerung zuständigen, üblichen Teilsteuerung MBST/P und die die Schnittstellensignale für Wartungsoperationen nachbildenden Signale MC für den Steuerbefehl und SF für die Steuersignale Auswahlschaltern MUXR und MUXS zugeführt werden. An den Ausgängen stehen daher wahlweise die Schnittstellensignale COM und SGS oder die entsprechenden Mikrobefehlssignale MC und SF als Schnittstellensignale CSIG und SSIG zur Verfügung, die der für den Betrieb des Seriendatenweges zuständigen Teilsteuerung MBST/S zugeführt werden, wobei in den Weg für den Steuerbefehl CSIG ein weiteres Befehlsregister COMR2 als Zwischenspeicher eingefügt ist. Die Steuersignale CSIG und SDAT können gegebenenfalls an die Teilsteuerung MBST/P für den parallelen Registerbetrieb weitergeleitet werden, falls eine vom Strobeimpuls SDAT getaktete Übernahme der Daten vom parallelen Leitungssystem PBUS in ein ausgewähltes Register PA, PB erfolgt. Das die jeweilige Umschaltung der Auswahlschalter steuernde Signale FWF wird von einer Steuerschaltung M-ST erzeugt.

In der durch ein Signal Cls getakteten Teilsteuerung MBST/S werden die ankommenden Signale decodiert und Ansteuersignale für alle betroffenen, seriell arbeitenden Register in der Funktionseinheit FUj festgelegt. Somit wird das in der Teileinheit TE1 vorhandene, rein seriell ausgebildete Schieberegister SREG1 vom Schiebetaktsignal Sh-Cll angesteuert, das gleichzeitig auch den Schiebevorgang in das bzw. aus dem Register auslöst. In gleicher Weise steuert das Schiebetaktsignal Sh-Cln das in der Teileinheit TEn vorgesehene, umschaltbare Parallel-/Seriell-Register PSREGn, dessen Inhalt wegen gleichzeitiger Ankopplung an das parallele Leitungssystem PBUS auch abhängig von der Teilsteuerung MBST/P gelesen oder geändert werden kann.

Die seriellen Ausgänge der Register SREG1...PSREGn in den Teileinheiten TE1...TEn der Funktionseinheit FUj sind jeweils mit einem der Eingänge eines Wegeschalters MUX2 verbunden, dessen Ausgang an einen der Eingänge eines weiteren Wegeschalters MUX zur Durchschaltung ankommender Daten über die Leitung DTOSVP zum Wartungsprozessor SVP oder zur Rückkopplung der aus den Schieberegistern SREG1...PSREGn ausgelesenen Information an deren serielle Eingänge angeschlossen ist. Die zu den Wegeschaltern MUX2 und MUX gehörenden Steuersignale SW2 und SW zur Durchschaltung einzelner oder mehrerer Register SREG1...PSREGn in den seriellen Datenweg DTOSVP werden dabei von der internen Teilsteuerung MBST/S geliefert.

Für den Datenaustausch mit den übrigen, durch das interne parallele Leitungssystem PBUS erreichbaren Registern PA, PB wird der Ausgang des Wegeschalters MUX2 zusätzlich mit einem der Eingänge eines dritten Wegeschalters MUX1 gekoppelt, dessen Ausgang auf den seriellen Eingang eines Parallelregisters ARPS mit der Funktion der Seriell-/Parallel- bzw. Parallel-/Seriell-Umsetzung geführt ist. Der dritte Wegeschalter MUX1 wird von einem ebenfalls aus der internen Mikrobefehlsteilsteuerung MBST/S abgeleiteten Signal SW1 gesteuert.

Soll der Inhalt eines der seriell arbeitenden Register SREG1...PSREGn in eines der Zielregister PA, PB eingetragen werden, so wird die über die Wegeschalter MUX2 und MUX1 ankommende serielle Eingangsinformation durch das Register ARPS in eine parallele Ausgangsinformation umgesetzt und in das über die Teilsteuerung MBST/P ausgewählte Zielregister PA oder PB eingeschrieben. Der für die Umsetzung und das Schieben vorgesehene Schiebetakteingang Sh-Cls des Parallelregisters ARPS wird von der Teilsteuerung MBST/S bereitgestellt, während der Steuereingang Clp für die Steuerung der parallelen Lese- bzw. Ladevorgänge von der Teilsteuerung MBST/P zur Verfügung gestellt wird.

Ein derartiger paralleler Ladevorgang ist dann gegeben, wenn beispielsweise eines der seriellen Schieberegister SREG1...PSREGn aus einem parallel ansteuerbaren Quellenregister PA oder PB geladen wird. Zuerst erfolgt die Umsetzung der parallel in das Register ARPS eingelesenen Information in eine serielle und anschließend das serielle Eintragen in das ausgewählte Schieberegister. Dazu ist der serielle Datenausgang des Registers ARPS mit einem der Eingänge des Wegeschalters MUX und dessen Ausgang mit den seriellen Eingängen der Schieberegister SREG1...PSREGn verbunden.

Bei jedem Schiebevorgang, beispielsweise aus dem seriellen Schieberegister SREG1, wird die auszulesende Information um ein Kennungszeichen KZ2, bestehend aus einer fest vorgegebenen Bitkombination, erweitert, das am Ende aller durchgeführten Schiebeschritte mit dem eintreffenden Kennungszeichen KZ1 verglichen wird. Wird z. B. der serielle Informationsfluß unterbrochen, erkennbar an KZ1 ungleich KZ2, dann zeigt dies ein Fehlersignal ER an. Auf diese Weise läßt sich die Durchgängigkeit des seriellen Datenaustausches über die seriellen, unterschiedlich langen Schieberegister prüfen.

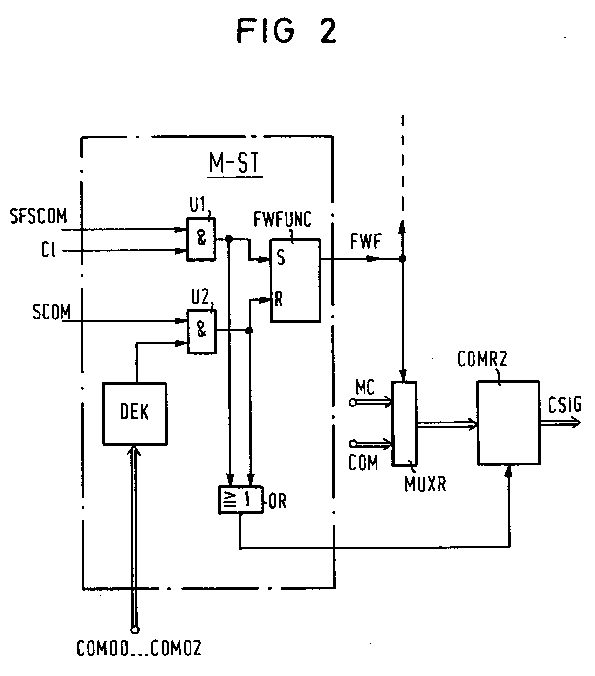

Das die Auswahlschalter MUXR und MUXS in FIG 1 steuernde Ausgangssignal FWF wird von einer Steuerschaltung M-ST gemäß FIG 2 erzeugt. Dabei weist eine bistabile Kippstufe FWFUNC an ihrem Setzeingang S das Ausgangssignal der UND-Verknüpfung U1 eines Taktsignals Cl und eines aus den nachgebildeten Steuersignalen abgeleiteten Subfunktionsbits SFSCOM auf. Bei einer Anforderung durch den Wartungsprozessor SVP wird die bistabile Kippstufe abhängig von vorgegebenen Steuerbits COMO0...COMO2, die am Ausgang des Befehlsregisters COMR1 gemäß FIG 1 abgegriffen, in einem Decoder DEK ausgewertet und mit dem Strobeimpuls SCOM durch das UND-Glied U2 verknüpft werden, über den Rücksetzeingang R zurückgesetzt.

Asynchron eintreffende Lesezugriffe, beispielsweise die für die Abfrage des Status in einer Zentraleinheit einer DVA, die auch über die Schnittstelle zum Wartungsprozessor abgewickelt werden und auch während eines mikroprogrammgesteuerten Ablaufes auftreten, können an speziellen Codes erkannt werden. Anhand der decodierten Steuerbits COMO0...COMO2 eines derartigen Zugriffsbefehls wird die bistabile Kippstufe FWFUNC nicht rückgesetzt und es erfolgt keine Übernahme eines derartigen Befehles in das Befehlsregister COMR2, da das ODER-Gatter OR an seinem Ausgang eine Null erzeugt.

Falls vom Wartungsprozessor ausgelöste Funktionen während eines gerade laufenden Maschinenbefehls anfallen, so wird dieser erst zu Ende ausgeführt, bevor das Mikroprogramm unterbrochen und der Zugriff für die Wartungsfunktionen freigegeben wird.

## Patentansprüche

1. Schaltungsanordnung für Datenverarbeitungsanlagen mit durch Mikrobefehlabläufe gesteuerten Funktionseinheiten (FUj), die über Schnittstellenanschlüsse (SI) mit einem Wartungsprozessor (SVP) zur Steuerung von Wartungsoperationen verbunden sind, wobei in jeder Funktionseinheit (FUj) ein Schnittstellenadapter (SIA) als Steuerschaltung vorgesehen ist, der vom Wartungsprozessor (SVP) eintreffende Steuerbefehle in einem Befehlsregister (COMR1) speichert und zum Teil in Steuersignale für den Datenaustausch zwischen der Funktionseinheit (FUj) und dem Wartungsprozessor (SVP) umsetzt, und wobei in der Funktionseinheit (FUj) vorgesehene Parallelregister (ARPS, PSREGn) abhängig von dem vorliegenden Steuerbefehl und den Steuersignalen auf Serienbetrieb umschaltbar und einzeln oder gruppenweise in den seriellen Datenweg (DTOSVP/DFRSVP) des Wartungsprozessors (SVP) einschaltbar sind, so daß in ihnen enthaltene und/oder aus anderen Parallelregistern (PA, PB) der Funktionseinheit (FUj) übernommene Daten zum Wartungsprozessor (SVP) übertragen oder von diesem Daten übernommen werden können,
**dadurch gekennzeichnet**,
- daß im Rahmen der die Funktionseinheiten (FUj) steuernden Mikrobefehle zusätzliche, den Wartungsfunktionen des Wartungsprozessors (SVP) entsprechende Mikrobefehle vorgesehen sind, bei deren Ausführung die normalerweise durch den Wartungsprozessor (SVP) ausgelösten und über eine interne Schnittstelle (FIF) zwischen dem Schnittstellenadapter (SIA) und der jeweiligen Funktionseinheit (FUj) weitergeleiteten Steuersignale (SGS) und Steuerbefehle (COM) nachgebildet werden,
- daß zur Ausführung eines die Wartungsfunktionen nachbildenden Mikrobefehles durch die Funktionseinheit (FUj) die dadurch ausgelösten Steuersignale (SF) und Steuerbefehle (MC) anstelle der vom Schnittstellenadapter (SIA) gelieferten Steuersignale (SGS) und Steuerbefehle (COM) wirksam geschaltet werden und
- daß zur Entkopplung der Steuerung durch den Wartungsprozessor (SVP) von der durch die interne Mikrobefehlssteuerung der Funktionseinheit (FUj) die jeweils wirksam geschalteten Steuerbefehle (COM bzw. MC) in ein gesondertes Befehlsregister (COMR2) übernommen werden.

2. Schaltungsanordnung nach Anspruch 1,
**dadurch gekennzeichnet**, daß zur Ausführung eines die Wartungsfunktion nachbildenden Mikrobefehls durch die interne Mikrobefehlssteuerung (MBST/S, MBST/P) eine die Steuerleitungen (SF bzw. MC) der Mikrobefehlssteuerung wirksam schaltende bistabile Kippstufe (FWFUNC) mittels eines vorgegebenen Subfunktionsbits (SFSCOM) gesetzt wird, die bei einer Anforderung durch den Wartungsprozessor (SVP) abhängig von vorgegebenen Steuerbits (COMO0...COMO2) des im Befehlsregister (COMR1) des Schnittstellenadapters (SIA) zwischengespeicherten Befehles (COM) zurückgesetzt wird, wenn eine durch die Steuerbits bedingte Ubernahme des im Befehlsregister (COMR1) des Schnittstellenadapters (SIA) zwischengespeicherten Steuerbefehles (COM) in das nachfolgende weitere Befehlsregister (COMR2) erfolgt.

3. Schaltungsanordnung nach Anspruch 1 oder 2,
**dadurch gekennzeichnet**,
daß zur Prüfung der Durchgängigkeit des seriellen Datenaustausches über die seriell arbeitenden Register (z. B. SREG1...PSREGn) Kennungszeichen (KZ2) verwendet werden, die jeweils vor einem Schiebevorgang des ausgewählten Registerinhalts den Daten beigefügt und mit den am Ende des Schiebevorgangs eintreffenden Kennungszeichen (KZ1) verglichen werden, so daß bei Nichtübereinstimmung ein Fehlersignal (ER) ausgelöst wird.

## Revendications

1. Circuit arrangement for data processing systems having function units (FUj) which are controlled by microinstruction sequences and are connected via interface connections (SI) to a maintenance processor (SVP) for controlling maintenance operations, in which there is provided in each function unit (FUj) an interface adapter (SIA) as a control circuit which stores control instructions arriving from the maintenance processor (SVP) in an instruction register (COMR1) and converts some of them into control signals for the data exchange between the function unit (FUj) and the maintenance processor (SVP), and in which parallel registers (ARPS, PSREGn) provided in the function unit (FUj) can be switched over to serial mode depending on the control instruction present and the control signals, and can be connected individually or in groups into the serial data path (DTOSVP/DFRSVP) of the maintenance processor (SVP) so that data contained therein and/or transferred from other parallel registers (PA, PB) of the function unit (FUj) can be transmitted to the maintenance processor (SVP), or data can be transferred from the latter, characterized
- in that within the framework of the microinstructions controlling the function units (FUj), additional microinstructions corresponding to the maintenance functions of the maintenance processor (SVP) are provided, during the execution of which the control signals (SGS) and control instructions (COM) normally initiated by the maintenance processor (SVP) and forwarded via an internal interface (FIF) between the interface adapter (SIA) and the respective function unit (FUj) are simulated,
- in that, for the execution of a microinstruction simulating the maintenance functions by the function unit (FUj), the control signals (SF) and control instructions (MC) thereby initiated are activated instead of the control signals (SGS) and control instructions (COM) supplied from the interface adapter (SIA), and
- in that, for decoupling the control by the maintenance processor (SVP) from that by the internal microinstruction controller of the function unit (FUj), the respective activated control instructions (COM or MC) are transferred into a separate instruction register (COMR2).

2. Circuit arrangement according to Claim 1, characterized in that, for executing a microinstruction simulating the maintenance function, a bistable flip-flop (FWFUNC) activating the control lines (SF and MC respectively) of the microinstruction controller is set by the internal microinstruction controller (MBST/S, MBST/P) by means of a predetermined subfunction bit (SFSCOM), which is reset in the case of a request by the maintenance processor (SVP) depending on predetermined control bits (COM00...COM02) of the instruction (COM) temporarily stored in the instruction register (COMR1) of the interface adapter (SIA) if the control instruction (COM) temporarily stored in the instruction register (COMR1) of the interface adapter (SIA) is transferred into the following further instruction register (COMR2) as a result of the control bits.

3. Circuit arrangement according to Claim 1 or 2, characterized in that for checking that the serial data exchange via the serial registers (for example SREG1...PSREGn) has been completed right through, code characters (KZ2) are used which are appended to the data in each case before a shift operation of the selected register contents and are compared with the code characters (KZ1) arriving at the end of the shift operation so that an error signal (ER) is triggered if they do not match.

## Claims

1. Montage pour installations de traitement de données comportant des unités fonctionnelles (FUj), qui sont commandées par des exécutions de micro-instructions et qui sont reliées par l'intermédiaire de bornes d'interface (SI) à un processeur de maintenance (SVP) servant à commander des opérations de maintenance, un adaptateur d'interface (SIA), qui mémorise des instructions de commande arrivant du processeur de maintenance (SVP), dans un registre d'instructions (COMR1) et les convertit en partie en des signaux de commande pour l'échange de données entre l'unité fonctionnelle (FUj) et le processeur de maintenance (SVP) étant prévu en tant que circuit de commande, dans chaque unité (FUj) fontionnelle, et des registres parallèles (ARPS, PSREGn), prévus dans l'unité fonctionnelle (FUj), pouvant être commutés, en fonction de l'instruction de commande présente et des signaux de commande, sur le fonctionnement série et pouvant être insérés individuellement ou par groupes dans la voie de transmission de données en série (DTOSVP/DFRSVP) du processeur de maintenance (SVP), de sorte que des données, que les registres contiennent et/ou qui sont transférées depuis d'autres registres parallèles (PA, PB) de l'unité fonctionnelle (SUj) puissent être transmises au processeur de maintenance (SVP) ou que des données puissent être prises en charge par ce processeur,
caractérisé par le fait que
- parmi les micro-instructions commandant les unités fonctionnelles (FUj), il est prévu des micro-instructions supplémentaires, qui correspondent aux fonctions de maintenance du processeur de maintenance (SVP), et lors de l'exécution desquelles sont reproduits les signaux de commande (SGS) et les instructions de commande (COM), qui sont déclenchés normalement par le processeur de maintenance (SVP) et sont retransmis par l'intermédiaire d'une interface interne (FIF) entre l'adaptateur d'interface (SIA) et l'unité fonctionnelle respective (FUj),
- pour l'exécution d'une micro-instruction reproduisant des fonctions de maintenance, par l'unité fonctionnelle (FUj), les signaux de commande (SF) et instructions de commande (MC), qui sont déclenchés par cette unité, sont rendus actifs à la place des signaux de commande (SGS) et des instructions de commande (COM), fournis par l'adaptateur d'interface (SIA), et
- pour le découplage de la commande par le processeur de maintenance (SVP) vis-à-vis de la commande interne par micro-instructions de l'unité fonctionnelle (FUj), les instructions de commande (COM ou MC), qui sont rendues respectivement actives, sont transférées dans un registre particulier d'instructions (COMR2).

2. Montage suivant la revendication 1, caractérisé par le fait que pour l'exécution d'une micro-instruction reproduisant la fonction de maintenance, par la commande interne de micro-instructions (MBST/S, MBST/P), un étage à bascule bistable (FWFUNC), qui place à l'état actif les lignes de commande (SF ou MC) de la commande à micro-instructions, est positionné au moyen d'un bit de fonction secondaire prédéterminé (SFSCOM), qui, lors d'une demande par le processeur de maintenance (SVP), est ramené à l'état initial en fonction de bits prédéterminés de commande (COM00...COM02) de l'instruction (COM) mémorisée temporairement dans le registre d'instructions (COMR1) de l'adaptateur d'interface (SIA), lorsqu'un transfert, provoqué par les bits de commande, de l'instruction de commande (COM) mémorisée temporairement dans le registre d'instructions (COMR1) de l'adaptateur d'interface (SIA) dans l'autre registre suivant d'instructions (COMR2) s'effectue.

3. Montage suivant la revendication 1 ou 2, caractérisé par le fait que pour contrôler la transmissibilité de l'échange des données en série par l'intermédiaire des registres (par exemple SREG1...PSREGn), qui ont un fonctionnement seriel, on utilise des signaux caractéristiques (KZ2), qui sont ajoutés aux données respectivement avant un processus de decalage du contenu sélectionné du registre et sont comparés aux signaux caractéristiques (KZ1), qui apparaissent à la fin du processus de décalage, de sorte qu'un signal d'erreur (ER) est déclenché en cas de non-concordance.
